(19) Europäisches Patentamt / European Patent Office / Office européen des brevets

(11) EP 2 225 622 B1

(12) FASCICULE DE BREVET EUROPEEN

(45) Date de publication et mention de la délivrance du brevet:
**18.04.2012 Bulletin 2012/16**

(21) Numéro de dépôt: **08866617.7**

(22) Date de dépôt: **19.12.2008**

(51) Int Cl.:
*G05D 1/10* (2006.01)    *G01C 21/16* (2006.01)
*G01S 1/56* (2006.01)    *G01S 5/14* (2006.01)
*G08G 5/02* (2006.01)

(86) Numéro de dépôt international:
**PCT/EP2008/068084**

(87) Numéro de publication internationale:
**WO 2009/083507 (09.07.2009 Gazette 2009/28)**

(54) **PROCEDE POUR L'AIDE A L'ATTERRISSAGE D'AERONEF UTILISANT UN GPS ET UN MLS DANS LE CADRE D'UNE APPROCHE AXIALE CALCULEE**

VERFAHREN ZUR FLUGZEUGLANDEUNTERSTÜTZUNG MITHILFE VON GPS UND MLS IM FALLE EINER BERECHNETEN AXIAL-ANNÄHERUNG

METHOD FOR AIRCRAFT LANDING ASSISTANCE USING GPS AND MLS IN CASE OF CALCULATED AXIAL APPROACH

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **21.12.2007 FR 0709035**

(43) Date de publication de la demande:
**08.09.2010 Bulletin 2010/36**

(73) Titulaire: **THALES**
**92200 Neuilly-sur-Seine (FR)**

(72) Inventeur: **BOUQUET, Ludovic**
**F-75015 Paris (FR)**

(74) Mandataire: **Lucas, Laurent Jacques**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A- 0 793 116    EP-A- 1 589 351
JP-A- 2 287 900**

- **POWELL F D: "A rotated-coordinate Gaussian position reconstruction algorithm for the microwave landing system" Navigation. Journal of the Institute of Navigation USA, vol. 37, no. 3, novembre 1990 (1990-11), pages 273-283, XP009104065 USA ISSN: 0028-1522**
- **D. VAN WILLIGEN ET AL.: "Radio Navigation - Air traffic systems"[Online] 26 septembre 2006 (2006-09-26), pages 51-64, XP002490240 Faculty Electrical Engineering, Mathematics and Computer Science, Delft University of Technology Extrait de l'Internet: URL:http://www.pn.ewi.tudelft.nl/education/et4-022/notes/> [extrait le 2008-07-29]**
- **HALL, JOHN W., HATZIS, PATRICIA M., POWELL, FREDERIC D.: "Examination of RTCA/DO-198 Position Reconstruction Algorithms for Area Navigation with the Microwave Landing System" DEFENSE TECHNICAL INFORMATION CENTER OAI-PMH REPOSITORY, juin 1990 (1990-06), pages 1-47, XP009104064 US**

**Description**

L'invention concerne un procédé pour l'aide à l'approche et à l'atterrissage d'aéronef utilisant un système d'atterrissage hyperfréquence et un système de positionnement par satellites. L'invention concerne plus particulièrement un procédé pour l'aide à l'approche et à l'atterrissage d'aéronef utilisant un système d'atterrissage hyperfréquence dans le cadre d'une approche axiale calculée.

Le système d'atterrissage hyperfréquence, appelé MLS, acronyme de l'expression anglo-saxonne "Microwave Landing System", est un système d'aide à l'approche et à l'atterrissage aux instruments destiné à fournir à un aéronef sa position en coordonnées sphériques dans un repère lié à la piste d'atterrissage, c'est-à-dire un angle d'azimut, un angle de site et une distance entre la piste d'atterrissage et l'aérone voir l'article "A Rotated-Coordinate gaussian Position Reconstruction Algorithm for the Microwave landing System" de F.D. Powell, Journal of the institute of Navigation, vol. 37, No.3, 1990). La distance entre la piste et l'aéronef est fournie par un équipement auxiliaire de mesure de distance, connu sous l'acronyme DME pour l'expression anglo-saxonne "Distance Measurement Equipment" et fonctionnant sur une fréquence différente ou par un système de positionnement par satellites. Le MLS a été développé pour pallier les inconvénients du système d'atterrissage aux instruments, appelé ILS, acronyme de l'expression anglo-saxonne "Instrument Landing System", et retenu par l'organisation de l'aviation civile internationale (OACI) pour succéder à l'ILS. Le MLS permet d'effectuer des approches courbes et segmentées, des atterrissages de catégories I, II et III et une augmentation de cadence d'atterrissage des aéronefs grâce à une diminution de l'espacement entre les aéronefs.

Le MLS, tel que normalisé par l'OACI, transmet des signaux de guidage latéral, c'est-à-dire un angle d'azimut, et de guidage vertical, c'est-à-dire un angle de site, en utilisant une technique de faisceaux battants à temps référencé et un signal multiplexé dans le temps. L'utilisation d'un signal multiplexé dans le temps permet la transmission des signaux de guidage latéral et vertical sur le même canal de radiofréquence sans créer d'interférences entre les signaux de guidage latéral et les signaux de guidage vertical. Les signaux de guidage sont émis sur une fréquence voisine de 5 Giga Hertz (GHz) par une station azimut et une station site. La station azimut est placée en fin de piste tandis que la station site est située sur le côté de la piste, à environ 300 mètres (m) du seuil de début de piste. Chaque station transmet un faisceau battant étroit balayant en aller et retour à vitesse angulaire constante l'espace de couverture suivant la coordonnée angulaire considérée. Une antenne et un récepteur de bord de l'aéronef reçoivent le faisceau battant une première fois lors du balayage aller et une deuxième fois lors du balayage retour. Il est ainsi possible de déterminer l'angle d'azimut et l'angle de site par la relation linéaire suivante :

$$\theta = (T - T_0).\frac{\nu}{2} \qquad\qquad (1)$$

où θ est l'angle d'azimut ou l'angle de site,

$T$ un intervalle de temps entre la réception des passages aller et retour du faisceau battant,

$T_0$ la valeur de l'intervalle de temps $T$ pour un angle θ nul et

$\nu$ la vitesse angulaire de balayage.

$T_0$ et $\nu$ sont des constantes définies par les normes internationales sur le MLS.

Le système d'atterrissage hyperfréquence à approche axiale calculée, appelé MLS-cc, acronyme de l'expression anglo-saxonne "Microwave Landing System - Computed Centerline", est un MLS dans lequel la station azimut n'est pas placée en bout de piste mais déportée sur un côté de la piste d'atterrissage. Le déplacement de la station azimut peut notamment être utilisé dans deux cas de figure. Dans le premier cas, la station azimut est située à proximité de la station site à des fins de simplicité de déploiement du MLS. Cette configuration est rencontrée principalement dans le cas d'équipements tactiques déployés sur des terrains sommaires et non préparés. Dans le deuxième cas, le MLS-cc est utilisé pour l'approche sur une piste secondaire non équipée d'un MLS mais située dans la zone de couverture de la piste équipée du MLS. Dans les deux cas, du fait du déport de la station azimut, le récepteur de l'aéronef mesure un angle, appelé angle d'azimut réel, qui ne correspond pas à l'angle d'azimut au sens conventionnel du terme, appelé angle d'azimut virtuel. Il est donc nécessaire de calculer l'angle d'azimut virtuel pour pouvoir fournir au pilote une information recentrée par rapport à l'axe de piste. Pour l'évaluer, il est nécessaire de calculer la position de l'aéronef dans un repère cartésien centré sur un point de référence au sol, appelé point au sol. Ce point au sol est par exemple l'une des deux stations ou le point d'intersection entre l'axe de piste et une droite perpendiculaire à l'axe de piste et passant par la station site. Ce point d'intersection est appelé MLS datum point.

Le calcul de la position de l'aéronef est réalisé par un système de 3 équations à 3 inconnues, paramétré par l'angle d'azimut réel, l'angle de site et une distance entre l'aéronef et le point au sol. Ces équations étant non linéaires, des algorithmes itératifs sont utilisés pour résoudre le système. Classiquement, les algorithmes itératifs sont du type Gauss-Seidel ou Newton-Raphson.

En utilisant un système de positionnement par satellites, il est possible d'utiliser le MLS datum point comme point au sol pour la détermination de la distance avec l'aéronef. Cependant, il existe des risques liés aux comportements des algorithmes itératifs dans cette situation, comme exposé dans la norme DO-226.

Dans le but d'optimiser la rapidité de convergence vers la position de l'aéronef et la précision de cette position, deux algorithmes itératifs peuvent être utilisés successivement, le premier afin de converger rapidement autour de la position de l'aéronef, le second afin d'obtenir une meilleure précision de cette position. Une telle combinaison d'algorithmes présente cependant l'inconvénient de complexifier la détermination de la position de l'aéronef, rendant difficile l'implantation des algorithmes itératifs et leur validation. Par ailleurs, ces algorithmes sont lents à exécuter, coûteux en termes de charge de calcul et risqués en comportement, en particulier du fait des risques de solutions multiples, de divergence et de stationnarité. Enfin, ces algorithmes dégradent la précision de calcul par leur nature itérative, en particulier la propagation d'erreurs.

Les algorithmes itératifs sont exécutés par le récepteur de l'aéronef, par exemple un récepteur multimode, appelé MMR, acronyme de l'expression anglo-saxonne "MultiMode Receiver". Le MMR comprend une chaîne radiofréquence, un processeur de signaux numériques, appelé DSP, acronyme de l'expression anglo-saxonne "Digital Signal Processor", un récepteur de système de positionnement global, mieux connu sous l'acronyme "GPS" pour l'expression anglo-saxonne "Global Positioning System" et un microprocesseur. La chaîne radiofréquence reçoit des signaux provenant de différents systèmes, en particulier les signaux de guidage provenant de la station azimut et de la station site. Le processeur traite les signaux provenant de la chaîne radiofréquence afin d'extraire les angles d'azimut et de site mais aussi des mots auxiliaires contenus dans les signaux de guidage. Le récepteur GPS peut être interne ou externe. Il transmet les positions de l'avion. Le microprocesseur assure plusieurs fonctions dont un calcul de la distance entre le MLS datum point et l'aéronef, un calcul de la position de l'aéronef à partir des algorithmes itératifs, un calcul de déviations entre la position de l'avion et un axe de descente optimal, une gestion de l'équipement et un interfaçage de communication avec une liaison d'un bus avion, par exemple un bus ARINC, abréviation pour la série de normes "Aeronautical Radio Incorporated". Le microprocesseur comprend un dispositif de gestion des algorithmes permettant de détecter et traiter la divergence, la non-convergence ou la fausse convergence d'un algorithme, de gérer l'initialisation, le séquencement et la combinaison des algorithmes.

Un but de l'invention est notamment de pallier tout ou partie des inconvénients précités. A cet effet, l'invention a pour objet un procédé pour l'aide à l'approche et à l'atterrissage d'aéronef utilisant un système de positionnement par satellites et un système MLS dans le cadre d'une approche axiale calculée, tel que défini dans la revendication 1.

L'invention a notamment pour avantage qu'elle permet de réduire la complexité du calcul de la position de l'aéronef, le calcul n'utilisant plus d'algorithme du type Gauss-Seidel ou Newton-Raphson mais un algorithme de simple recherche des racines d'un polynôme du second degré, tel que décrit dans la norme DO-198. Par conséquent, l'algorithme est moins complexe à certifier et les problèmes liés à l'utilisation d'algorithmes itératifs sont supprimés. En particulier, les problèmes de divergence et de stationnarité, de propagation d'erreurs et de solutions multiples sont supprimés. En outre, l'algorithme est moins couteux en termes de charge de calcul.

L'invention sera mieux comprise et d'autres avantages apparaîtront à la lecture de la description détaillée de modes de réalisation donnés à titre d'exemple, description faite en regard de dessins annexés qui représentent :

- la figure 1, un exemple de configuration de MLS à approche axiale calculée ;
- la figure 2, un angle de site entre une antenne site et un aéronef ;
- la figure 3, des angles d'azimut entre, d'une part, l'antenne azimut et l'aéronef et, d'autre part, un axe de piste d'atterrissage et l'aéronef ;
- la figure 4, un exemple d'étapes mises en oeuvre par le procédé selon l'invention ;
- la figure 5, un exemple de sous-étapes pour la détermination d'une distance entre un point de référence et l'aéronef ;
- la figure 6, un exemple de configuration de piste d'atterrissage, de point de référence, de station azimut et d'aéronef pour la détermination de la distance entre le point de référence et l'aéronef ;
- la figure 7, un exemple de sous-étapes pour la détermination d'une distance entre un point intermédiaire et l'aéronef ;
- la figure 8, un repère géographique et un repère géocartésien ;
- la figure 9, un autre exemple de sous-étapes pour la détermination de la distance entre le point de référence et l'aéronef.

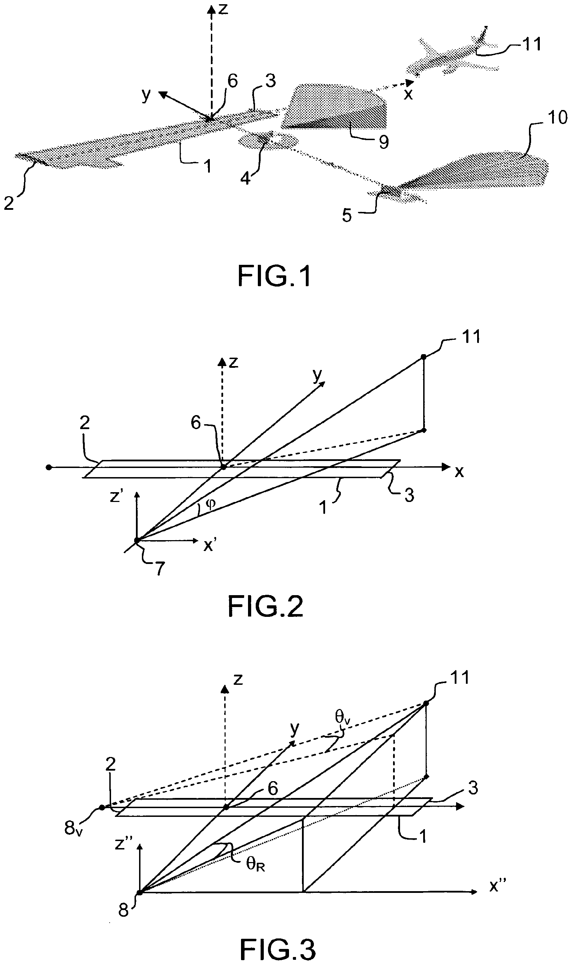

La figure 1 présente un exemple de configuration de MLS dans le cadre d'une approche axiale calculée. Le MLS comprend une piste d'atterrissage 1 d'axe de piste x orienté d'un seuil de fin de piste 2 vers le seuil de début de piste 3, une station site 4 et une station azimut 5. La piste d'atterrissage 1 définit un repère cartésien direct $R_c$ d'axes l'axe de piste longitudinal, appelé premier axe $x$, un axe transversal de la piste d'atterrissage 1 passant par la station site 4, appelé deuxième axe $y$ et un axe perpendiculaire aux premier et deuxième axes, appelé troisième axe $z$. Le deuxième axe $y$ est orienté de la station site 4 vers la piste d'atterrissage 1. Un point d'intersection entre le premier axe $x$ et le deuxième axe $y$ définit le centre du repère $R_c$ et est appelé MLS datum point 6. Il correspond généralement au point de toucher des roues de l'aéronef sur la piste d'atterrissage 1. La station site 4 comprend une antenne site 7 et la station azimut 5 comprend une antenne azimut 8. Chaque antenne comprend un centre de phase à partir duquel les coordonnées de l'antenne peuvent être déterminées. Pour la suite de la description, on assimilera donc la position de chaque antenne à celle de son centre de phase. Les antennes site 7 et azimut 8 émettent des signaux de guidage par des faisceaux battants 9 et 10 pour un guidage vertical et latéral d'un aéronef 11 lors d'une phase d'approche et/ou d'atterrissage. Les faisceaux battants 9 et 10 permettent également la transmission de mots auxiliaires contenant, par exemple, des coordonnées de l'antenne site 7 et de l'antenne azimut 8.

La figure 2 représente un angle de site $\varphi$ entre l'antenne site 7 et l'aéronef 11. L'angle de site $\varphi$ est repéré dans un repère cartésien $R'_c$ centré sur l'antenne site 7 et d'axes un axe *x'*, l'axe *y* et un axe *z'*, les axes *x'* et *z'* étant parallèles respectivement aux axes *x* et *z*. Il est défini par l'angle entre le plan (*x',y*) et une droite passant par l'antenne site 7 et l'aéronef 11.

La figure 3 représente un angle d'azimut réel $\theta_R$ et un angle d'azimut virtuel $\theta_v$. L'angle d'azimut réel $\theta_R$ est repéré dans un repère cartésien $R''_c$ centré sur l'antenne azimut 8 et d'axes un axe *x''*, l'axe *y* et un axe *z''*, les axes *x''* et *z''* étant parallèles respectivement aux axes *x* et *z*. Il est défini par l'angle entre le plan (*x'',z''*) et une droite passant par l'antenne azimut 8 et l'aéronef 11. L'angle d'azimut virtuel $\theta_v$ est repéré dans le repère cartésien $R_c$ et défini par l'angle entre le plan (*x*, *z*) et une droite passant par l'aéronef 11 et un point virtuel 8v du plan (*x*, *z*). Ce point virtuel correspond à une antenne azimut dans le cadre d'un système MLS, habituellement située sur le premier axe *x* à une distance de 300 m après le seuil de fin de piste 2.

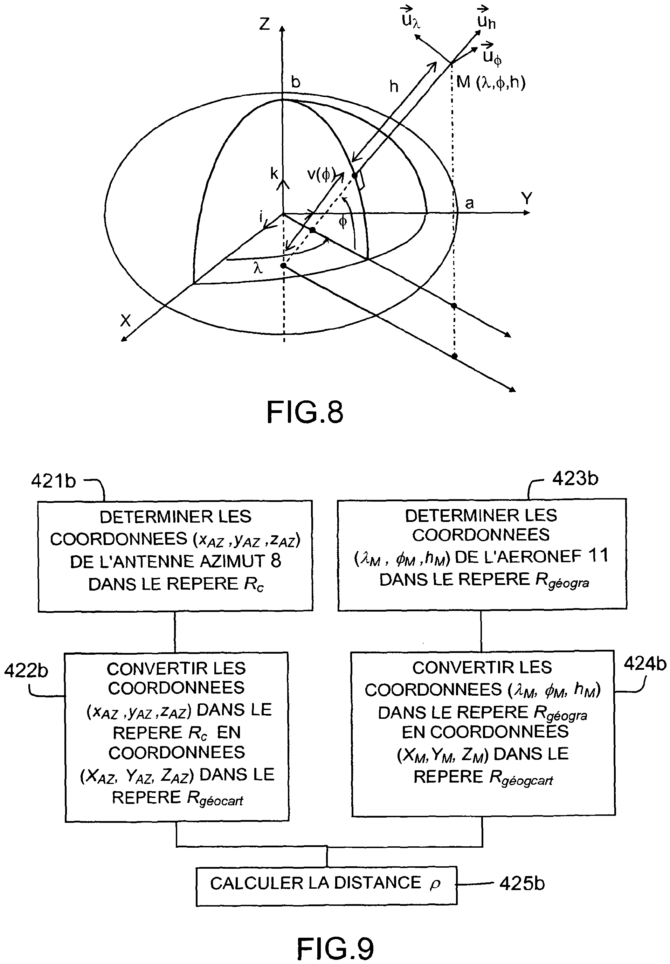

Pour la suite de la description, on considère en plus du repère cartésien $R_c$ centré sur le MLS datum point 6, du repère cartésien $R'_c$ centré sur l'antenne site 7 et du repère cartésien $R''_c$ centré sur l'antenne azimut 8, un repère géocartésien $R_{géocart}$ (*O, X, Y, Z*) et un repère géographique $R_{géogra}$ ($\lambda$, $\phi$, *h*), illustrés à la figure 8.

Le repère géocartésien $R_{géocart}$ (*O, X, Y, Z*) est un repère dans lequel le centre *O* est proche du centre de masse de la Terre, l'axe OZ est proche de l'axe de rotation terrestre et le plan OXZ est proche du plan méridien origine.

Le repère géographique $R_{géogra}$ ($\lambda$, $\phi$, *h*) est un repère dans lequel la Terre est représentée par un ellipsoïde, chaque point *M* ($\lambda$, $\phi$, *h*) étant repéré par rapport à cet ellipsoïde. $\lambda$ désigne la longitude, soit l'angle entre le plan OXZ et le plan méridien contenant le point concerné, $\phi$ désigne la latitude, soit l'angle entre le plan OXY et la normale à l'ellipsoïde passant par le point concerné et *h* désigne la hauteur ellipsoïdale. Chaque point *M*($\lambda$, $\phi$, *h*) définit un vecteur $\vec{u}_\lambda$ parallèle au plan *P* tangent à l'ellipsoïde passant par le projeté orthogonal de *M*($\lambda$, $\phi$, *h*) et orienté vers le nord vrai, un vecteur $\vec{u}_\phi$ parallèle au plan *P* et orienté vers l'Est et un vecteur $\vec{u}_h$ orthogonal au plan *P*. L'ellipsoïde représentant la Terre est par exemple l'ellipsoïde WGS84 de demi grand axe *a* et de demi petit axe *b*. A partir du demi grand axe *a* et du demi petit axe *b*, on définit l'excentricité *e* et la grande normale $v(\phi)$ de l'ellipsoïde par les relations :

$$ e = \sqrt{\frac{a^2 - b^2}{a^2}} , \qquad v(\phi) = \frac{a}{\sqrt{1 - e^2 * \sin^2(\phi)}} \qquad (2) $$

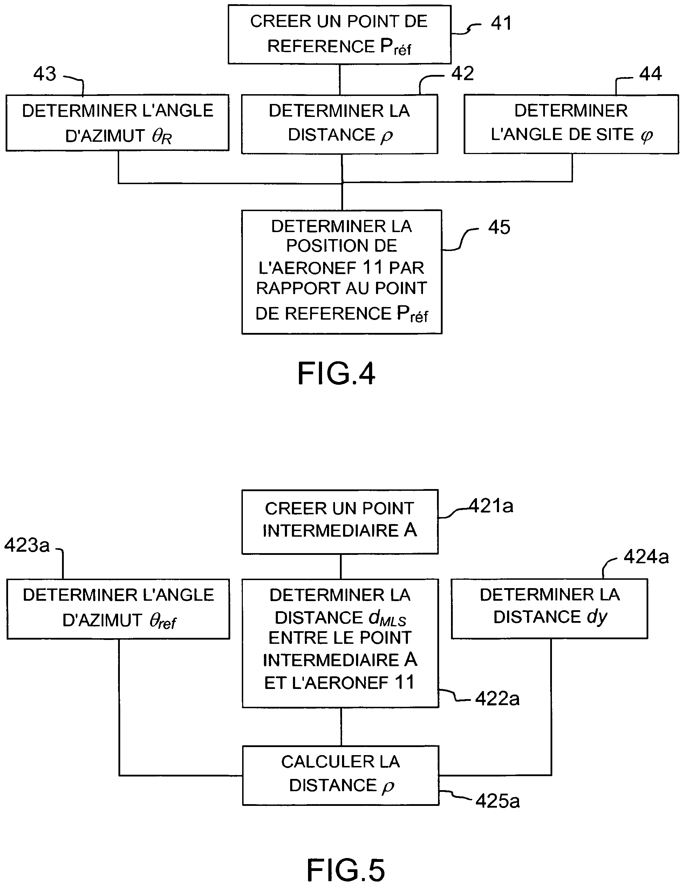

La figure 4 montre un exemple d'étapes mises en oeuvre par le procédé selon l'invention. Pour ce procédé, on considère la configuration de MLS à approche axiale calculée décrite en référence à la figure 1 et dans laquelle l'antenne site 7 et l'antenne azimut 8 sont situées dans un même plan horizontal parallèle au plan (*x*, *y*) et situé au-dessus de celui-ci à une distance *dz*. Dans une première étape 41, un point de référence $P_{réf}$ de mêmes coordonnées que celles de l'antenne azimut 8 ou de l'antenne site 7 est créé. Dans une deuxième étape 42, une distance $\rho$ entre le point de référence $P_{réf}$ et l'aéronef 11 est déterminée par un système de positionnement par satellites. Dans une troisième étape 43, l'angle d'azimut réel $\theta_R$ entre le plan (*x''*, *z''*) et la droite passant par l'antenne azimut 8 et l'aéronef 11 est déterminé. Dans une quatrième étape 44, l'angle de site $\varphi$ entre le plan (*x'*, *y*) et la droite passant par l'antenne site 7 et l'aéronef 11 est déterminée. Dans une cinquième étape 45, la position de l'aéronef 11 est déterminée par rapport au point de référence $P_{réf}$ à partir de la distance $\rho$, de l'angle d'azimut réel $\theta_R$ et de l'angle de site $\varphi$.

Un tel procédé permet de simplifier la détermination de la position de l'aéronef 11 par rapport au point de référence $P_{réf}$. En effet, la position de l'aéronef 11 peut être déterminée par l'intermédiaire d'un algorithme simplifié. Un tel algorithme simplifié est par exemple décrit dans la norme DO-198 et exposé partiellement en annexe. Il se limite essentiellement à la détermination de racines d'un polynôme du second degré et présente par conséquent plusieurs avantages. Un premier avantage est la réduction de la complexité du calcul de la position de l'aéronef 11. Par conséquent, l'algorithme est moins complexe à certifier, demande moins de ressources de calcul que les algorithmes de l'état de l'art et peut être exécuté plus rapidement. Un deuxième avantage est la suppression du caractère itératif du calcul de la position de l'aéronef 11. Par conséquent, les risques de solutions multiples, de propagation d'erreurs, de divergence et de stationnarité sont supprimés. A partir de la position de l'aéronef 11 par rapport au point de référence P$_{réf}$, l'angle d'azimut virtuel θ$_v$ peut être déterminé par la relation suivante :

$$\theta_V = \arctan\left(\frac{-(y_M + y_{AZ})}{\sqrt{(x_M + D_{se})^2 + (z_M + z_{AZ})^2}}\right) \tag{3}$$

Où ($x_M$, $y_M$, $z_M$) sont les coordonnées de l'aéronef 11 dans le repère $R_c$,

($x_{AZ}$, $y_{AZ}$, $z_{AZ}$) sont les coordonnées de l'antenne azimut 8 dans le repère $R_c$,

$D_{se}$ est la distance entre le seuil de fin de piste 2 et le MLS datum point 6.

Les coordonnées $y_{AZ}$ et $z_{AZ}$ peuvent être déterminées à partir du mot auxiliaire A1 contenu dans les signaux de guidage. La distance $D_{se}$ peut être déterminée par le mot auxiliaire A3.

L'étape 42 de détermination de la distance ρ entre le point de référence P$_{réf}$ et l'aéronef 11 peut être réalisée selon au moins deux modes de réalisation.

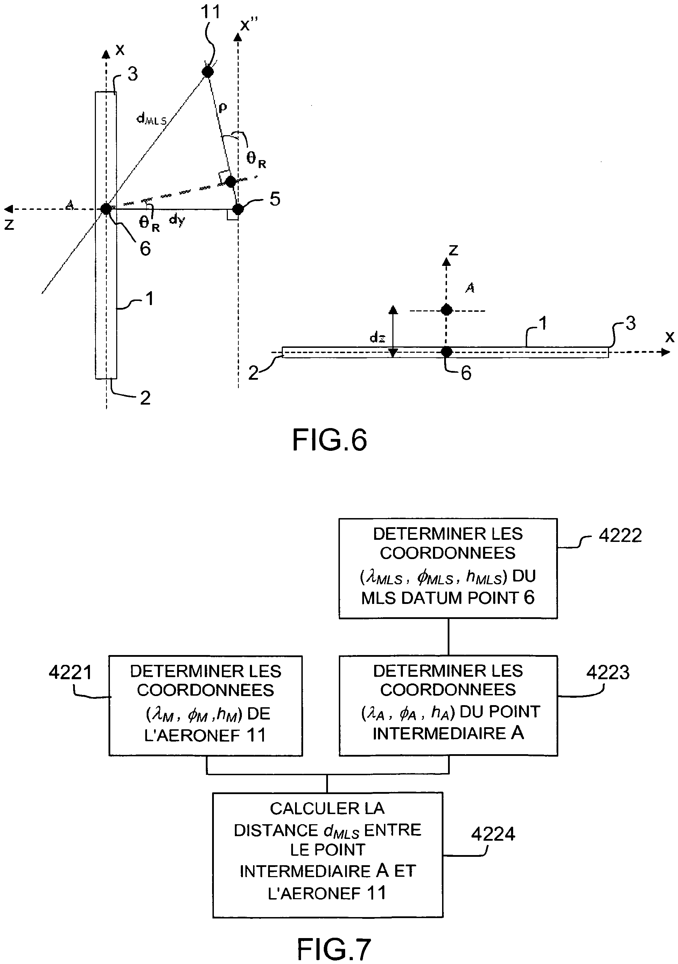

Un premier mode de réalisation est illustré par les figures 5 et 6.

Dans une première étape 421a, un point intermédiaire A est créé. Le point intermédiaire A a, dans le repère $R_c$, les mêmes coordonnées que le MLS datum point 6 suivant le premier axe $x$ et le deuxième axe $y$ et la même coordonnée que le point de référence P$_{réf}$ suivant le troisième axe $z$. Le point intermédiaire A est donc situé au-dessus du MLS datum point 6, la distance $dz$ séparant ces deux points.

Dans une deuxième étape 422a, une distance $d_{MLS}$ entre le point intermédiaire A et l'aéronef 11 est déterminée. Selon un mode particulier de réalisation, la détermination de la distance $d_{MLS}$ entre le point intermédiaire A et l'aéronef 11 comprend les sous-étapes suivantes, illustrées par la figure 7. Dans une première étape 4221, des coordonnées ($\lambda_M$, $\phi_M$, h$_M$) de l'aéronef 11 sont déterminées, par exemple dans le repère $R_{géogra}$ ($\lambda$, $\phi$, $h$). Ces coordonnées ($\lambda_M$, $\phi_M$, $h_M$) sont déterminées par un système de positionnement par satellites, par exemple le système GPS, l'aéronef 11 comprenant un récepteur traitant les signaux reçus des satellites pour déterminer sa position. Dans une deuxième étape 4222, les coordonnées ($\lambda_{MLS}$, $\phi_{MLS}$, $h_{MLS}$) du MLS datum point 6 sont déterminées, par exemple dans le repère $R_{géogra}$ ($\lambda$,$\phi$,$h$). Ces coordonnées ($\lambda_{MLS}$, $\phi_{MLS}$, $h_{MLS}$) peuvent notamment être déterminées à partir des signaux émis par les faisceaux battants 9 et 10. En particulier, selon les normes définies par l'OACI, ces coordonnées sont contenus dans les mots auxiliaires B40 et B41 des signaux. Dans une troisième étape 4223, les coordonnées ($\lambda_A$, $\phi_A$, $h_A$) du point intermédiaire A sont déterminées à partir des coordonnées ($\lambda_{MLS}$, $\phi_{MLS}$, $h_{MLS}$) du MLS datum point 6 par les relations suivantes :

$$\left|\begin{array}{l} \lambda_A = \lambda_{MLS} \\ \phi_A = \phi_{MLS} \\ h_a = h_{MLS} + dz \end{array}\right. \tag{4}$$

Dans une quatrième étape 4224, la distance $d_{MLS}$ entre le point intermédiaire A et l'aéronef 11 est calculée à partir des coordonnées ($\lambda_M$, $\phi_M$, $h_M$) de l'aéronef 11 et des coordonnées ($\lambda_A$, $\phi_A$, $h_A$) du point intermédiaire A. Dans une forme particulière de réalisation, les coordonnées ($\lambda_M$, $\phi_M$, $h_M$) et ($\lambda_A$, $\phi_A$, $h_A$) sont converties en coordonnées ($X_M$, $Y_M$, $Z_M$) et ($X_A$, $Y_A$, $Z_A$) dans le repère $R_{géocart}$ par les formules suivantes :

$$\left|\begin{array}{l} X_M = (\nu(\phi_M) + h_M)\cos\phi_M \cos\lambda_M \\ Y_M = (\nu(\phi_M) + h_M)\cos\phi_M \sin\lambda_M \\ Z_M = \left[(b^2/a^2)\nu(\phi_M) + h_M\right]\sin\phi_M = \left[(1 - e^2)\nu(\phi_M) + h_M\right]\sin\phi_M \end{array}\right. \tag{5}$$

Les mêmes formules permettent de déterminer les coordonnées ($X_A$, $Y_A$, $Z_A$) en remplaçant $\lambda_M$, $\phi_M$ et $h_M$ par $\lambda_A$, $\phi_A$ et $h_A$.

La distance $d_{MLS}$ peut ensuite être calculée par la relation suivante :

$$d_{MLS} = \sqrt{(X_M - X_A)^2 + (Y_M - Y_A)^2 + (Z_M - Z_A)^2} \tag{6}$$

A noter que la détermination des coordonnées de l'aéronef 11, correspondant à l'étape 4221, peut également être effectuée après ou pendant l'étape 4222 et/ou l'étape 4223. Dans tous les cas, l'étape 4224 de calcul de la distance $d_{MLS}$ doit être accomplie le plus rapidement possible après l'étape 4221 de détermination des coordonnées de l'aéronef 11 afin d'obtenir une distance $d_{MLS}$ pratiquement en temps réel.

Dans une troisième étape 423a, un angle d'azimut $\theta_{réf}$ entre l'aéronef 11 et un plan parallèle au plan ($x$, $z$) passant par le point de référence $P_{réf}$ est déterminé. Avantageusement, le point de référence $P_{réf}$ a les mêmes coordonnées que celles de l'antenne azimut 8. L'angle d'azimut $\theta_{réf}$ peut alors être directement déterminé, cet angle étant égal à l'angle d'azimut réel $\theta_R$.

Dans une quatrième étape 424a, une distance $dy$ entre le MLS datum point 6 et le point de référence $P_{réf}$ suivant le deuxième axe $y$ est déterminée. Selon un mode particulier de réalisation, la distance $dy$ est déterminée à partir des mots auxiliaires transmis à l'aéronef 11 par les signaux émis par les stations site 4 et azimut 5. En particulier, la distance $dy$ est contenue dans les bits 21 à 30 du mot auxiliaire A1.

Dans une cinquième étape 425a, la distance $\rho$ est calculée à partir de l'angle d'azimut $\theta_{réf}$ et des distances $d_{MLS}$ et $dy$ par la relation suivante :

$$\rho = \sqrt{d_{MLS}^2 - \left(dy.\cos\theta_{réf}\right)^2} + dy.\sin\theta_{réf} \ . \qquad (7)$$

A noter que l'ordre des étapes 422a, 423a et 424a n'a pas d'importance, les opérations liées à ces étapes pouvant être effectuées dans un ordre différent ou simultanément.

Un deuxième mode de réalisation est illustré par les figures 8 et 9.

Dans une première étape 421b, les coordonnées ($x_{AZ}$, $y_{AZ}$, $z_{AZ}$) de l'antenne azimut 8, repérée par le point $S_{AZ}$, sont déterminées dans le repère cartésien $R_c$, par exemple par les mots auxiliaires transmis à l'aéronef 11 par les stations site 4 et azimut 5. Selon les normes établies par l'OACI, la coordonnée $x_{AZ}$ peut être déterminée par le mot auxiliaire A1, en particulier les bits 31 à 43, la coordonnée $y_{AZ}$ peut être déterminée par les bits 21 à 30 du mot auxiliaire A1 et la coordonnée $z_{AZ}$ peut être déterminée par les bits 57 à 63 du mot auxiliaire A1.

Dans une deuxième étape 422b, les coordonnées ($x_{AZ}$, $y_{AZ}$, $z_{AZ}$) dans le repère $R_c$ sont converties en coordonnées ($X_{AZ}$, $Y_{AZ}$, $Z_{AZ}$) dans le repère $R_{géocart}$. La conversion peut notamment être effectuée en décomposant le vecteur $\overrightarrow{OS_{AZ}}$ en un vecteur $\overrightarrow{OR}$ et un vecteur $\overrightarrow{RS_{AZ}}$ où le point R est le MLS datum point 6 :

$$\overrightarrow{OS_{AZ}} = \overrightarrow{OR} + \overrightarrow{RS_{AZ}} \qquad (8)$$

Le point R a pour coordonnées dans le repère $R_{géocart}$ :

$$\overrightarrow{OR} = \begin{pmatrix}\left(v(\phi_R)+h\right) \\ 0 \\ 0\end{pmatrix}\begin{pmatrix}\vec{u}_\lambda \\ \vec{u}_\varphi \\ \vec{u}_h\end{pmatrix} = \begin{pmatrix}\left(v(\phi_R)+h\right)\cos\phi_R\cos\lambda_R \\ \left(v(\phi_R)+h\right)\cos\phi_R\sin\lambda_R \\ \left[\left(\frac{b^2}{a^2}\right)v(\phi_R)+h\right]\sin\phi_R\end{pmatrix}\begin{pmatrix}\vec{X} \\ \vec{Y} \\ \vec{Z}\end{pmatrix} \qquad (9)$$

où les coordonnées ($\lambda_R$, $\phi_R$, $h_R$) peuvent être obtenus par des mots auxiliaires B40 et B41 provenant des faisceaux battants 9 et 10.

Le vecteur $\overrightarrow{RS_{AZ}}$ peut être déterminé dans le repère $R_{géocart}$ par les relations :

$$\overrightarrow{RS_{AZ}} = \begin{pmatrix}x_{AZ} \\ y_{AZ} \\ z_{AZ}\end{pmatrix}\begin{pmatrix}\vec{x} \\ \vec{y} \\ \vec{z}\end{pmatrix} = \begin{pmatrix}x_{AZ} \\ y_{AZ} \\ z_{AZ}\end{pmatrix}\begin{pmatrix}\cos\psi & -\sin\psi & 0 \\ -\sin\psi & -\cos\psi & 0 \\ 0 & 0 & 1\end{pmatrix}\begin{pmatrix}\vec{u}_\lambda \\ \vec{u}_\varphi \\ \vec{u}_h\end{pmatrix} \qquad (10)$$

Où l'angle ψ est l'angle entre le premier axe x et le nord vrai, cet angle pouvant être obtenu par le mot auxiliaire A1 ou B41,

Et où les vecteurs $\vec{u}_\lambda$, $\vec{u}_\phi$ et $\vec{u}_h$ peuvent être déterminés dans le repère $R_{géocart}$ par les relations :

$$\vec{u}_\lambda = \begin{pmatrix} -\sin\phi_R\cos\lambda_R \\ -\sin\phi_R\sin\lambda_R \\ \cos\phi_R \end{pmatrix} . \begin{pmatrix} \bar{X} \\ \bar{Y} \\ \bar{Z} \end{pmatrix} \qquad \vec{u}_\phi = \begin{pmatrix} -\sin\lambda_R \\ \cos\lambda_R \\ 0 \end{pmatrix} . \begin{pmatrix} \bar{X} \\ \bar{Y} \\ \bar{Z} \end{pmatrix}$$

$$\vec{u}_h = \begin{pmatrix} \cos\phi_R\cos\lambda_R \\ \cos\phi_R\sin\lambda_R \\ \sin\phi_R \end{pmatrix} . \begin{pmatrix} \bar{X} \\ \bar{Y} \\ \bar{Z} \end{pmatrix} \qquad (11)$$

Dans une troisième étape 423b, les coordonnées ($\lambda_M$, $\phi_M$, $h_M$) de l'aéronef 11, repéré par le point $M$, sont déterminées, par exemple dans le repère $R_{géogra}(\lambda,\phi,h)$. Ces coordonnées ($\lambda_M$, $\phi_M$, $h_M$) peuvent notamment être déterminées par un système de positionnement par satellites, par exemple le GPS, l'aéronef 11 comprenant un récepteur traitant les signaux reçus des satellites pour déterminer sa position.

Dans une quatrième étape 424b, les coordonnées ($\lambda_M$, $\phi_M$, $h_M$) dans le repère $R_{géogra}(\lambda,\phi,h)$ sont converties en coordonnées ($X_M$, $Y_M$, $Z_M$) dans le repère $R_{géocart}$. L'aéronef 11 a pour coordonnées dans le repère $R_{géocart}$ :

$$\left| \begin{array}{l} X_M = \left(\nu(\phi_M) + h_M\right)\cos\phi_M\cos\lambda_M \\ Y_M = \left(\nu(\phi_M) + h_M\right)\cos\phi_M\sin\lambda_M \\ Z_M = \left[\left(b^2/a^2\right)\nu(\phi_M) + h_M\right]\sin\phi_M = \left[\left(1-e^2\right)\nu(\phi_M) + h_M\right]\sin\phi_M \end{array} \right. \qquad (12)$$

Dans une cinquième étape 425b, la distance ρ est calculée à partir des coordonnées ($X_{AZ}$, $Y_{AZ}$, $Z_{AZ}$) et ($X_M$, $Y_M$, $Z_M$) par la relation suivante :

$$\rho = \sqrt{\left(X_M - X_{AZ}\right)^2 + \left(Y_M - Y_{AZ}\right)^2 + \left(Z_M - Z_{AZ}\right)^2} \qquad (13)$$

A noter que les étapes 421b et 422b peuvent être effectuées avant, après ou simultanément aux étapes 423b et 424b.

Ce deuxième mode de réalisation présente l'avantage de ne pas utiliser de mesure d'angle d'azimut pour le calcul de la distance ρ entre le point de référence $P_{réf}$ et l'aéronef 11. Il en résulte une plus grande précision du calcul de la distance ρ et par conséquent du calcul de la position de l'aéronef 11.

Le procédé décrit ci-dessus peut notamment être appliqué par un dispositif embarqué à bord d'un aéronef 11. Ce dispositif est par exemple un récepteur multimode de bord, communément appelé "multimode receiver" et abrégé par "MMR". Un récepteur multimode de bord a pour fonction de guider avec précision l'aéronef 11 pendant une phase d'approche finale et d'atterrissage. Il peut notamment indiquer à un pilote de l'aéronef 11 qu'il s'écarte de la trajectoire optimale de descente. Le MMR peut normalement opérer en modes ILS, VOR, MLS et GPS différentiel, "VOR" étant l'acronyme de "Very high frequency Omnidirectional Range". En modes ILS, VOR et MLS, le MMR reçoit un signal radiofréquence d'une antenne ILS, d'une antenne VOR ou des antennes MLS, selon le cas. Le signal radiofréquence est décodé et les déviations de l'aéronef 11 par rapport à la trajectoire optimale de descente sont calculées et transmises à un système de gestion de vol de l'aéronef 11.

Selon l'invention, le MMR est utilisé en mode MLS. Le MMR comprend des moyens d'acquisition de signaux radiofréquences recevant les signaux de guidage des faisceaux battants 9 et 10, des moyens de traitement des signaux radiofréquences et des moyens pour déterminer la position de l'aéronef 11 par rapport au point de référence $P_{réf}$ selon le procédé décrit ci-dessus. Le MMR peut également comprendre un récepteur de système de positionnement par satellites, par exemple un récepteur GPS. Selon une autre forme de réalisation, le récepteur GPS peut également être externe au MMR, une interface entre le MMR et le récepteur GPS étant par exemple réalisée au moyen d'un bus série, par exemple un bus ARINC. Dans une forme particulière de réalisation, le MMR comprend des moyens pour déterminer l'angle d'azimut virtuel $\theta_v$ à partir de la position de l'aéronef 11. Le bus ARINC peut être utilisé pour échanger des données entre le MMR et un système de gestion de vol de l'aéronef 11. En particulier, la position de l'aéronef 11, l'angle d'azimut virtuel $\theta_v$, l'angle de site $\varphi$ et/ou la distance $\rho$ peuvent être transmis à un pilote automatique de l'aéronef 11.

**ANNEXE**

Cette annexe présente la problématique de calcul de la position d'un aéronef et un algorithme simplifié permettant ce calcul inspiré de la norme DO-198.

**Présentation du problème et formalisation géométrique**

La fonction MLS-cc est utilisée pour des atterrissages sur des pistes équipées de stations MLS situées dans des positions non optimales (déport de la station azimut ou station azimut d'une autre piste d'atterrissage).
La connaissance de l'angle d'azimut et de l'angle de site obtenus à partir des informations transmises par les stations MLS mais aussi de la distance par rapport à un point au sol (utilisation d'un DME ou d'un GPS) permet de calculer la position de l'aéronef, la position des stations les unes par rapport aux autres étant connue.
On définit les notations suivantes dans un repère cartésien direct :

- $(x_M, y_M, z_M)$ : coordonnées de l'aéronef,
- $(x_{AZ}, y_{AZ}, z_{AZ})$ : coordonnées de l'antenne azimut,
- $(x_S, y_S, z_S)$ : coordonnées de l'antenne site,
- $(x_D, y_D, z_D)$ : coordonnées du DME ou du point de référence $P_{\text{réf}}$,
- $\rho$ : distance entre l'aéronef et le DME ou le point de référence,
- $\theta$ : angle d'azimut, en radians,
- $\phi$ : angle de site, en radians.

L'angle $\phi$ correspond à l'angle entre l'aéronef et l'axe de piste et non à l'angle entre l'aéronef et le plan de descente tel que mesuré en MLS. Une correction, consistant à ajouter la pente, est donc nécessaire pour obtenir $\phi$ à partir de la donnée fournie par le MLS.
Il est possible de calculer $\rho$, $\theta$ et $\phi$ à partir des relations suivantes :

$$\rho = \sqrt{\left(x_M - x_D\right)^2 + \left(y - y_D\right)^2 + \left(z - z_D\right)^2} \tag{0.1}$$

$$\theta = \arctan\left[-\frac{y_M - y_{AZ}}{\sqrt{\left(x_M - x_{AZ}\right)^2 + \left(z_M - z_{AZ}\right)^2}}\right] \tag{0.2}$$

$$\phi = \arctan\left[\frac{z_M - z_S}{\sqrt{\left(x_M - x_S\right)^2 + \left(y_M - y_S\right)^2}}\right] \tag{0.3}$$

Les équations ci-dessus sont équivalentes à :

$$x_M = x_D + \sqrt{\rho^2 - \left(y_M - y_D\right)^2 - \left(z_M - z_D\right)^2} \text{ avec } x_M > x_D \tag{1.1}$$

$$y_M = y_{AZ} - \tan\theta\sqrt{\left(x_M - x_{AZ}\right)^2 + \left(z_M - z_{AZ}\right)^2} \tag{1.2}$$

$$z_M = z_S + \tan\phi\sqrt{(x_M - x_S)^2 + (y_M - y_S)^2} \qquad (1.3)$$

**[0053]** - La résolution du système d'équations non linéaires (1.1) à (1.3) est complexe et nécessite l'utilisation d'un algorithme itératif, par exemple défini dans la norme DO-226. Toutefois, dans certains cas de figure, le problème peut être simplifié. Pour cela, il faut des caractéristiques précises de géométrie au sol. Selon ces caractéristiques, l'une des deux antennes des stations MLS et le point de référence sont situés au même endroit et les antennes site et azimut sont situées dans un même plan horizontal.

**Simplification du problème et hypothèses nécessaires**

L'origine du repère cartésien est fixée au point où se trouve l'antenne azimut. On a donc $(x_{AZ}, y_{AZ}, z_{AZ}) = (0,0,0)$. La distance entre l'aéronef et la station azimut est déterminée par les coordonnées $(x_M, y_M, z_M)$ de l'aéronef obtenues par un récepteur de système de positionnement par satellites à bord de l'aéronef et les coordonnées $(x_{AZ}, y_{AZ}, z_{AZ})$ de l'antenne azimut transmises par la station site ou la station azimut dans les mots auxiliaires B40 et B41.
Pour la suite de la description, on considérera que l'antenne azimut et le point de référence sont situés au même endroit. On obtiendrait cependant des résultats similaires en considérant que l'antenne site et le point de référence sont situés au même endroit. On a donc $(x_{AZ}, y_{AZ}, z_{AZ}) = (x_D, y_D, z_D)$. A partir des équations (1.1) à (1.3), on peut écrire :

$$x_M^2 = \rho^2 - y_M^2 - z_M^2 \qquad (2.1)$$

$$y_M = -\tan\theta\sqrt{x_M^2 + z_M^2} \qquad (2.2)$$

$$z_M = z_S + \tan\phi\sqrt{(x_M - x_S)^2 + (y_M - y_S)^2} \qquad (2.3)$$

La combinaison de (2.1) et (2.2) donne :

$$y_M = \rho\sin\theta \qquad (2.4)$$

La coordonnée $y_M$ de l'aéronef est donc facilement calculable à partir de la seule connaissance de $\rho$ et $\theta$.
Du fait que les antennes site et azimut sont situées dans le même plan horizontal, on a $z_S = 0$. La combinaison des équations (2.1) et (2.3) donne :

$$x_M^2 - 2x_M x_S \sin^2\phi + \sin^2\phi(d^2 + y_M^2 - 2y_M y_S) - \rho^2\cos^2\theta\cos^2\phi = 0$$

$$(2.5)$$

où d désigne la distance entre l'antenne site et l'antenne azimut, soit :

$$d = \sqrt{x_S^2 + y_S^2}$$

Trouver la coordonnée $x_M$ de l'aéronef se réduit donc à résoudre une équation du second degré (2.5) où $a = 1$, $b = -2x_S \sin^2\phi$ et $c = \sin^2\phi(d^2 + y_M^2 - 2y_M y_S) - \rho^2\cos^2\theta\cos^2\phi$.

Le déterminant est :

$$\Delta = 4x_S^2 \sin^4 \phi - 4\left[\sin^2 \phi\left(d^2 + y_M^2 - 2y_M y_S\right) - \rho^2 \cos^2 \theta \cos^2 \phi\right]$$

La résolution de cette équation aboutit à des solutions multiples puisque les solutions sont de la forme :

$$x_M = -x_S \sin^2 \phi \pm \frac{\sqrt{\Delta}}{2} \qquad\qquad (2.6)$$

La première solution, $x_M = -x_S \sin^2 \phi - \frac{\sqrt{\Delta}}{2}$, est toujours négative, la coordonnée $x_S$ étant toujours positive. Cette solution correspond à une situation où l'aéronef est situé derrière l'antenne azimut, c'est-à-dire en dehors du secteur couvert par le balayage des stations site et azimut. Cette solution n'est donc pas possible.

La seconde solution, $x_M = -x_S \sin^2 \phi + \frac{\sqrt{\Delta}}{2}$, correspond à une situation où l'aéronef est situé devant l'antenne azimut. C'est la solution à considérer dans le cas d'un aéronef effectuant une approche axiale calculée.

La coordonnée $z_M$ de l'aéronef peut alors être déterminée par l'équation (2.1), soit :

$$z_M = \pm\sqrt{\rho^2 - y_M^2 - x_M^2}$$

La première solution, $z_M = -\sqrt{\rho^2 - y_M^2 - x_M^2}$, correspond à une position de l'aéronef en dessous de l'antenne azimut. Cette solution n'est donc pas possible.

La deuxième solution, $z_M = +\sqrt{\rho^2 - y_M^2 - x_M^2}$, correspond à une position de l'aéronef au dessus de l'antenne azimut. C'est la solution à considérer.

Il est donc toujours possible de déterminer la position de l'aéronef par les relations suivantes :

$$\left|\begin{array}{l} x_M = -x_S \sin^2 \phi + \dfrac{\sqrt{\Delta}}{2} \\[2mm] y_M = \rho \sin \theta \\[2mm] z_M = +\sqrt{\rho^2 - y_M^2 - x_M^2} \end{array}\right.$$

## Revendications

1.   Procédé pour l'aide à l'approche et à l'atterrissage d'aéronef (11) utilisant un système de positionnement par satellites et un système MLS dans le cadre d'une approche axiale calculée, le système MLS comportant une piste d'atterrissage (1), une station site (4) et une station azimut (5),
la piste d'atterrissage (1) définissant un repère cartésien direct $R_c$ comprenant comme axes un axe longitudinal de la piste d'atterrissage (1), appelé premier axe ($x$), un axe transversal de la piste d'atterrissage (1) passant par la station site (4), appelé deuxième axe ($y$) et un axe perpendiculaire aux premier et deuxième axes, appelé troisième axe ($z$), un point d'intersection entre le premier axe ($x$) et le deuxième axe ($y$) définissant le centre du repère $R_c$, appelé point de piste (6),
la station site (4) comprenant une antenne site (7) et la station azimut (5) comprenant une antenne azimut (8), chaque antenne comprenant un centre de phase, les centres de phase des antennes site (7) et azimut (8) étant situés dans un plan parallèle à un plan ($x$, $y$) à une distance $dz$ du point de piste (6) selon le troisième axe ($z$),

**caractérisé en ce qu'**il comporte les étapes suivantes :

(41) créer un point de référence $P_{réf}$ de mêmes coordonnées que celles du centre de phase de l'antenne azimut (8) et/ou de l'antenne site (7),

(42) déterminer une distance $\rho$ entre le point de référence $P_{réf}$ et l'aéronef (11) par le système de positionnement par satellites,

(43) déterminer un angle d'azimut ($\theta_R$) entre une droite passant par le centre de phase de l'antenne azimut (8) et l'aéronef (11) et un plan parallèle à un plan ($x$, $z$) passant par le centre de phase de l'antenne azimut (8),

(44) déterminer un angle de site ($\varphi$) entre une droite passant par le centre de phase de l'antenne azimut (8) et l'aéronef (11) et le plan parallèle au plan ($x$, $y$) passant les centres de phase des antennes site (7) et azimut (8),

(45) déterminer, à partir de la distance $\rho$ entre le point de référence $P_{réf}$ et l'aéronef (11), de l'angle d'azimut et de l'angle de site, la position de l'aéronef (11) par rapport au point de référence $P_{réf}$,

la détermination de la distance $\rho$ entre le point de référence $P_{réf}$ et l'aéronef (11) comprenant les étapes suivantes :

créer, dans le repère $R_c$, un point intermédiaire (A) de mêmes coordonnées ($\lambda_A$, $\phi_A$, $h_A$) que les coordonnées ($\lambda_{MLS}$, $\phi_{MLS}$, $h_{MLS}$) du point de piste (6) suivant le premier axe ($x$) et le deuxième axe ($y$) et de même cordonnée que le point de référence $P_{réf}$ suivant le troisième axe ($z$),

déterminer une distance $d_{MLS}$ entre le point intermédiaire (A) et l'aéronef (11),

déterminer un angle d'azimut $\theta_{réf}$ entre le plan ($x$, $z$) et une droite passant par le point de référence $P_{réf}$ et l'aéronef,

déterminer une distance $dy$ entre le point de piste (6) et le point de référence $P_{réf}$ suivant le deuxième axe ($y$),

calculer la distance $\rho$ entre le point de référence $P_{réf}$ et l'aéronef (11) par la relation

$$\rho = \sqrt{d_{MLS}^{~2} - \left(dy.\cos\theta_{réf}\right)^2} + dy.\sin\theta_{réf}\,.$$

2. Procédé selon la revendication 1, **caractérisé en ce que** la détermination de la distance $d_{MLS}$ entre le point intermédiaire (A) et l'aéronef (11) comprend les étapes suivantes :

déterminer des coordonnées ($\lambda_M$, $\phi_M$, $h_M$) de l'aéronef (11),

déterminer des coordonnées ($\lambda_{MLS}$, $\phi_{MLS}$, $h_{MLS}$) du point de piste (6),

déterminer des coordonnées ($\lambda_A$, $\phi_A$, $h_A$) du point intermédiaire (A) à partir des coordonnées ($\lambda_{MLS}$, $\phi_{MLS}$, $h_{MLS}$) du point de piste (6),

calculer la distance $d_{MLS}$ entre le point intermédiaire (A) et l'aéronef (11) à partir des coordonnées ($\lambda_M$, $\phi_M$, $h_M$) de l'aéronef (11) et celles ($\lambda_A$, $\phi_A$, $h_A$) du point intermédiaire (A).

3. Procédé selon la revendication 2, **caractérisé en ce que** les coordonnées ($\lambda_{MLS}$, $\phi_{MLS}$, $h_{MLS}$) du point de piste (6) sont déterminées à partir de signaux émis par la station site (4) ou la station azimut (5).

4. Procédé selon l'une des revendications 2 ou 3, **caractérisé en ce que** les coordonnées ($\lambda_M$, $\phi_M$, $h_M$) de l'aéronef (11) sont déterminées par un système de positionnement global (GPS).

5. Récepteur multimode pouvant équiper un aéronef (11) pour l'aide à l'approche et à l'atterrissage à approche axiale calculée comportant des moyens d'acquisition de signaux radiofréquences et des moyens de traitement des signaux radiofréquences, **caractérisé en ce qu'**il comprend, en outre, des moyens pour déterminer une position d'un aéronef (11) par le procédé selon l'une des revendications précédentes.

6. Récepteur multimode selon la revendication 5, **caractérisé en ce que** le récepteur multimode comprend un récepteur de système de positionnement par satellites.

**Claims**

1. Method for assistance during the approach and landing of an aircraft (11) using a satellite positioning system and an MLS system in the context of a calculated axial approach, the MLS system comprising a landing runway (1), a site station (4) and an azimuth station (5),

the landing runway (1) defining a direct cartesian reference system $R_c$ comprising as axes a longitudinal axis of the landing runway (1), referred to as the first axis ($x$), a transverse axis of the landing runway (1) which extends via the site station (4), referred to as the second axis ($y$), and an axis perpendicular to the first and second axes, referred to as the third axis ($z$), a point of intersection between the first axis ($x$) and the second axis ($y$) defining the centre of the reference system $R_c$, referred to as the runway point (6),

the site station (4) comprising a site antenna (7) and the azimuth station (5) comprising an azimuth antenna (8), each antenna comprising a phase centre, the phase centres of the site antenna (7) and azimuth antenna (8) being located in a plane parallel with a plane ($x$, $y$) at a distance $dz$ from the runway point (6) along the third axis ($z$), **characterised in that** it comprises the following steps:

(41) creating a reference point $P_{ref}$ having the same coordinates as those of the phase centre of the azimuth antenna (8) and/or the site antenna (7),

(42) determining a distance $\rho$ between the reference point $P_{ref}$ and the aircraft (11) using the satellite positioning system,

(43) determining an azimuth angle ($\theta_R$) between a straight line which extends via the phase centre of the azimuth antenna (8) and the aircraft (11) and a plane which is parallel with a plane ($x$, $z$) and which extends via the phase centre of the azimuth antenna (8),

(44) determining a site angle ($\varphi$) between a straight line which extends via the phase centre of the azimuth antenna (8) and the aircraft (11) and the plane which is parallel with the plane ($x$, $y$) and which extends via the phase centres of the site antenna (7) and azimuth antenna (8),

(45) determining, from the distance $\rho$ between the reference point $P_{ref}$ and the aircraft (11), from the azimuth angle and the site angle, the position of the aircraft (11) relative to the reference point $P_{ref}$,

the determination of the distance $\rho$ between the reference point $P_{ref}$ and the aircraft (11) comprising the following steps:

creating, in the reference system $Rc$, an intermediate point (A) having the same coordinates ($\lambda_A$, $\phi_A$, $h_A$) as the coordinates ($\lambda_{MLS}$, $\phi_{MLS}$, $h_{MLS}$) of the runway point (6) along the first axis ($x$) and the second axis ($y$) and having the same coordinate as the reference point $P_{ref}$ along the third axis ($z$),

determining a distance $d_{MLS}$ between the intermediate point (A) and the aircraft (11),

determining an azimuth angle $\theta_{ref}$ between the plane ($x$, $z$) and a straight line which extends via the reference point $P_{ref}$ and the aircraft,

determining a distance $dy$ between the runway point (6) and the reference point $P_{ref}$ along the second axis ($y$),

calculating the distance $\rho$ between the reference point $P_{ref}$ and the aircraft (11) via the relationship

$$\rho = \sqrt{d_{MLS}{}^2 - \left(dy.\cos\theta_{ref}\right)^2} + dy.\sin\theta_{ref} \quad .$$

2. Method according to claim 1, **characterised in that** the determination of the distance $d_{MLS}$ between the intermediate point (A) and the aircraft (11) comprises the following steps:

determining coordinates ($\lambda_M$, $\phi_M$, $h_M$) of the aircraft (11),

determining coordinates ($\lambda_{MLS}$, $\phi_{MLS}$, $h_{MLS}$) of the runway point (6),

determining coordinates ($\lambda_A$, $\phi_A$, $h_A$) of the intermediate point (A) from the coordinates ($\lambda_{MLS}$, $\phi_{MLS}$, $h_{MLS}$) of the runway point (6),

calculating the distance $d_{MLS}$ between the intermediate point (A) and the aircraft (11) from the coordinates ($\lambda_M$, $\phi_M$, $h_M$) of the aircraft (11) and those ($\lambda_A$, $\phi_A$, $h_A$) of the intermediate point (A).

3. Method according to claim 2, **characterised in that** the coordinates ($\lambda_{MLS}$, $\phi_{MLS}$, $h_{MLS}$) of the runway point (6) are determined from signals transmitted by the site station (4) or the azimuth station (5).

4. Method according to either claim 2 or claim 3, **characterised in that** the coordinates ($\lambda_M$, $\phi_M$, $h_M$) of the aircraft (11) are determined by a global positioning system (GPS).

5. Multimode receiver with which an aircraft (11) may be provided in order to assist during the approach and landing with calculated axial approach comprising means for capturing radiofrequency signals and means for processing radiofrequency signals, **characterised in that** it further comprises means for determining a position of an aircraft (11) using the method according to any one of the preceding claims.

6. Multimode receiver according to claim 5, **characterised in that** the multimode receiver comprises a satellite positioning system receiver.

**Patentansprüche**

1. Verfahren zum Unterstützen des Anflugs und des Landens eines Luftfahrzeugs (11) mit Hilfe eines Satellitenpositionierungssystems und eines MLS-Systems im Rahmen eines berechneten axialen Anflugs, wobei das MLS-System eine Landebahn (1), eine Lagestation (4) und eine Azimutstation (5) umfasst,

wobei die Landebahn (1) eine direkte kartesische Marke $R_c$ definiert, die als Achsen eine Längsachse der Landebahn (1), erste Achse ($x$) genannt, eine durch die Lagestation (4) verlaufende Querachse der Landebahn (1), zweite Achse ($y$) genannt, und eine Achse lotrecht zur ersten und zur zweiten Achse umfasst, dritte Achse ($z$) genannt, wobei ein Schnittpunkt zwischen der ersten Achse ($x$) und der zweiten Achse ($y$) den Mittelpunkt der Marke $R_c$ definiert, Landebahnpunkt (6) genannt,

wobei die Lagestation (4) eine Lageantenne (7) umfasst und die Azimutstation (5) eine Azimutantenne (8) umfasst, wobei jede Antenne ein Phasenzentrum aufweist, wobei sich das Phasenzentrum der Lageantenne (7) und der Azimutantenne (8) in einer Ebene parallel zu einer Ebene ($x$, $y$) in einer Distanz $dz$ vom Landebahnpunkt (6) gemäß der dritten Achse ($z$) befindet,

**dadurch gekennzeichnet, dass** es die folgenden Schritte beinhaltet:

(41) Erzeugen eines Referenzpunkts $P_{ref}$ mit denselben Koordinaten wie die des Phasenzentrums der Azimutantenne (8) und/oder der Lageantenne (7),

(42) Ermitteln einer Distanz $p$ zwischen dem Referenzpunkt $P_{ref}$ und dem Luftfahrzeug (11) durch das Satellitenpositionierungssystem,

(43) Ermitteln eines Azimutwinkels ($\theta_R$) zwischen einer Geraden, die durch das Phasenzentrum der Azimutantenne (8) und dem Luftfahrzeug (11) und einer Ebene parallel zu einer Ebene ($x$, $z$) verläuft, die durch das Phasenzentrum der Azimutantenne (8) verläuft,

(44) Ermitteln eines Lagewinkels ($\varphi$) zwischen einer Geraden, die durch das Phasenzentrum der Azimutantenne (8) und dem Luftfahrzeug (11) und der Ebene parallel zu der Ebene ($x$, $y$) verläuft, die durch die Phasenzentren der Lageantenne (7) und der Azimutantenne (8) verläuft,

(45) Ermitteln, anhand der Distanz $p$ zwischen dem Referenzpunkt $P_{ref}$ und dem Luftfahrzeug (11), des Azimutwinkels und des Lagewinkels, der Position des Luftfahrzeugs (11) in Bezug auf den Referenzpunkt $P_{ref}$, wobei die Ermittlung der Distanz $p$ zwischen dem Referenzpunkt $P_{ref}$ und dem Luftfahrzeug (11) die folgenden Schritte beinhaltet:

Erzeugen, in der Marke $R_c$, eines Zwischenpunkts (A) mit denselben Koordinaten ($\lambda_A$, $\phi_A$, $h_A$) wie die Koordinaten ($\lambda_{MLS}$, $\phi_{MLS}$, $h_{MLS}$) des Landebahnpunkts (6) gemäß der ersten Achse ($x$) und der zweiten Achse ($y$) und derselben Koordinate wie der Referenzpunkt $P_{ref}$ gemäß der dritten Achse ($z$),

Ermitteln einer Distanz $d_{MLS}$ zwischen dem Zwischenpunkt (A) und dem Luftfahrzeug (11),

Ermitteln eines Azimutwinkels $\theta_{ref}$ zwischen der Ebene ($x$, $z$) und einer Geraden, die durch den Referenzpunkt $P_{ref}$ und das Luftfahrzeug verläuft,

Ermitteln einer Distanz $dy$ zwischen dem Landebahnpunkt (6) und dem Referenzpunkt $P_{ref}$ gemäß der zweiten Achse ($y$),

Berechnen der Distanz $p$ zwischen dem Referenzpunkt $P_{ref}$ und dem Luftfahrzeug (11) durch die Relation

$$\rho = \sqrt{d_{MLS}^2 - \left(dy.\cos\theta_{ref}\right)^2} + dy.\sin\theta_{ref} \ .$$

2. Verfahren nach Anspruch 1, **dadurch gekennzeichnet, dass** die Ermittlung der Distanz $d_{MLS}$ zwischen dem Zwischenpunkt (A) und dem Luftfahrzeug (11) die folgenden Schritte beinhaltet:

Ermitteln der Koordinaten ($\lambda_M$, $\phi_M$, $h_M$) des Luftfahrzeugs (11),

Ermitteln der Koordinaten ($\lambda_{MLS}$, $\phi_{MLS}$, $h_{MLS}$) des Landebahnpunkts (6),

Ermitteln der Koordinaten ($\lambda_A$, $\phi_A$, $h_A$) des Zwischenpunkts (A) anhand der Koordinaten ($\lambda_{MLS}$, $\phi_{MLS}$, $h_{MLS}$) des Landebahnpunkts (6),

Berechnen der Distanz $d_{MLS}$ zwischen dem Zwischenpunkt (A) und dem Luftfahrzeug (11) anhand der Koordinaten ($\lambda_M$, $\phi_M$, $h_M$) des Luftfahrzeugs (11) und derer ($\lambda_A$, $\phi_A$, $h_A$) des Zwischenpunkts (A).

3. Verfahren nach Anspruch 2, **dadurch gekennzeichnet, dass** die Koordinaten ($\lambda_{MLS}$, $\phi_{MLS}$, $h_{MLS}$) des Landebahnpunkts (6) anhand der von der Lagestation (4) oder der Azimutstation (5) ausgesendeten Signale ermittelt werden.

4. Verfahren nach Anspruch 2 oder 3, **dadurch gekennzeichnet, dass** die Koordinaten ($\lambda_M$, $\phi_M$, $h_M$) des Luftfahrzeugs (11) von einem globalen Positionierungssystem (GPS) ermittelt werden.

5. Mehrmodenempfänger, mit dem ein Luftfahrzeug (11) ausgestattet sein kann, um beim Anflug und beim Landen mit berechnetem axialem Anflug zu unterstützen, der Mittel zum Erfassen von Funkfrequenzsignalen und Mittel zum Verarbeiten von Funkfrequenzsignalen umfasst, **dadurch gekennzeichnet, dass** er darüber hinaus Mittel zum Ermitteln einer Position eines Luftfahrzeugs (11) mit dem Verfahren nach einem der vorherigen Ansprüche umfasst.

6. Mehrmodenempfänger nach Anspruch 5, **dadurch gekennzeichnet, dass** der Mehrmodenempfänger einen Satellitenpositionierungssystem-Empfänger umfasst.

FIG.1

FIG.2

FIG.3

```
                    ┌────────────────────────┐
                    │   CREER UN POINT DE     │── 41
                    │   REFERENCE P_réf       │
                    └────────────┬───────────┘
                                 │
┌──────────────────┐  ┌──────────┴──────────┐  ┌──────────────────┐
│ 43               │  │ 42                   │  │             44   │
│ DETERMINER L'ANGLE│  │  DETERMINER LA       │  │  DETERMINER      │
│ D'AZIMUT θ_R     │  │  DISTANCE ρ          │  │  L'ANGLE DE SITE φ│
└────────┬─────────┘  └──────────┬──────────┘  └─────────┬────────┘
         │                       │                        │
         └───────────┬───────────┴────────────────────────┘
                     │
            ┌────────┴─────────────┐
            │   DETERMINER LA       │── 45
            │   POSITION DE         │
            │   L'AERONEF 11 PAR    │
            │   RAPPORT AU POINT    │
            │   DE REFERENCE P_réf  │
            └──────────────────────┘
```

**FIG.4**

```
                    ┌────────────────────────┐
                    │   CREER UN POINT        │── 421a
                    │   INTERMEDIAIRE A       │
                    └────────────┬───────────┘
                                 │
┌──────────────────┐  ┌──────────┴──────────┐  ┌──────────────────┐
│ 423a             │  │  DETERMINER LA       │  │          424a    │
│ DETERMINER L'ANGLE│  │  DISTANCE d_MLS      │  │  DETERMINER LA   │
│ D'AZIMUT θ_ref   │  │  ENTRE LE POINT      │  │  DISTANCE dy      │
└────────┬─────────┘  │  INTERMEDIAIRE A     │  └─────────┬────────┘
         │            │  ET L'AERONEF 11     │── 422a     │
         │            └──────────┬──────────┘            │
         │                       │                        │
         └───────────┬───────────┴────────────────────────┘
                     │
            ┌────────┴─────────────┐
            │   CALCULER LA         │
            │   DISTANCE ρ          │── 425a
            └──────────────────────┘
```

**FIG.5**

FIG.6

FIG.7

## FIG.8

| 421b | 423b |
|---|---|
| DETERMINER LES COORDONNEES $(x_{AZ}, y_{AZ}, z_{AZ})$ DE L'ANTENNE AZIMUT 8 DANS LE REPERE $R_c$ | DETERMINER LES COORDONNEES $(\lambda_M, \phi_M, h_M)$ DE L'AERONEF 11 DANS LE REPERE $R_{géogra}$ |

| 422b | 424b |
|---|---|
| CONVERTIR LES COORDONNEES $(x_{AZ}, y_{AZ}, z_{AZ})$ DANS LE REPERE $R_c$ EN COORDONNEES $(X_{AZ}, Y_{AZ}, Z_{AZ})$ DANS LE REPERE $R_{géocart}$ | CONVERTIR LES COORDONNEES $(\lambda_M, \phi_M, h_M)$ DANS LE REPERE $R_{géogra}$ EN COORDONNEES $(X_M, Y_M, Z_M)$ DANS LE REPERE $R_{géogcart}$ |

CALCULER LA DISTANCE $\rho$ — 425b

## FIG.9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **F.D. POWELL.** A Rotated-Coordinate gaussian Position Reconstruction Algorithm for the Microwave landing System. *Journal of the institute of Navigation,* 1990, vol. 37 (3